# EUROPEAN PATENT SPECIFICATION

(11) **EP 0 388 988 B1**
(45) Date of publication and mention of the grant of the patent: **04.08.1993**
(21) Application number: 90105603.6
(22) Date of filing: 23.03.1990
(51) Int. Cl.: B60R 1/06

(54) **An outdoor mirror**
Aussenrückblickspiegel
Rétroviseur extérieur

(30) Priority: 24.03.1989 JP 32665/89 U; 27.03.1989 JP 33163/89 U; 27.03.1989 JP 33164/89 U; 07.07.1989 JP 79588/89 U
(43) Date of publication of application: 26.09.1990
(73) Proprietor: MURAKAMI KAIMEIDO CO., LTD, Shizuoka-Ken, 422 (JP)
(72) Inventor: Komatsu, Toru, Shimada-shi, Shizuoka-ken 427 (JP); Itoh, Yasutoshi, Shizuoka-shi, Shizuoka-ken 420 (JP); Iwanabe, Naoto, Fujieda-shi, Shizuoka-ken 426 (JP); Sato, Hidenori, Shimizu-shi, Shizuoka-ken 424 (JP)
(74) Representative: Riederer Freiherr von Paar zu Schönau, Anton

(56) References cited:
- CH-A- 632 387
- US-A- 4 237 366
- PATENT ABSTRACTS OF JAPAN vol. 12, no. 109 (M-682)(2956) 08 April 1988, & JP-A-62 238149 (NISSAN MOTOR CO LTD) 19 October 1987,
- PATENT ABSTRACTS OF JAPAN vol. 14, no. 91 (M-938)(4034) 20 February 1990, & JP-A-1 301427 (AISIN SEIKI CO LTD) 05 December 1989,

## Description

### 1. BACKGROUND OF THE INVENTION

This invention relates to a waterdrop repellent outdoor mirror to be used at the exterior of a vehicle. More particularly, it relates to an outer mirror of a vehicle which mirror is to provide a clear view by immediately preventing waterdrops from sticking onto the mirror surface, which is accomplished by means of a piezoelectric oscillator and a heater which are provided on the rear side of the mirror.

### 2. DESCRIPTION OF THE PRIOR ART

Outer mirros at the exterior of a vehicle have often not given a clear rear view due to sticking waterdrop e.g. due to rain and mist when driving on rainy and humid days, and the full range of view of the mirror has often been narrowed by a clouding surface thereof if frosted or fogged. This has been greatly dangerous.

One of known improvements for this was to provide a wiper equipment on the exterior mirror, wiping the surface thereof mechanically. Also, a heater is known forming a heater layer which comprises such as an electrically conductive carbon layer on the rear surface of the mirror, and removing the cloud of the front surface thereof by passage of an electric current through said layer (Japanese Laid Open Utility Model Nos. 51-68140 and 51-80842). In the former case, the view range of the mirror is screened, and the swings by the wiper arm coming frequently across the surface are troublesome for the driver. In the latter case, to remove the waterdrops the temperature of the mirror surface should be kept at about 50 to 60°C; considerable time is necessary to reach such temperature, and further time is needed for the evaporization of the waterdrops.

In order to improve such inconvenience, a vibration mirror has been proposed wherein a piezoelectric oscillator is provided on the rear surface of a conventional mirror, whereby waterdrops on the mirror surface are dispersed and removed due to the vibration thereof (Japanese Laid Open Utility Model No. 62-82850). Generally, such vibration mirror is contemplated to remove the waterdrops sticking to the surface of the mirror glass by making said piezoelectric oscillator vibrate through an ultrasonic generator and amplifier, so that when the mirror glass is vibrated and waterdrops are sticking to the surface thereof, the waterdrops receive vibration by the mirror glass vibration, thereby they drop out by their own weight or are evaporated.

It is necessary to have the vibration evenly over the whole of the mirror glass to remove the waterdrops uniformly from the sticked mirror glass. However, in the conventional vibration mirrors, vibration induced to the mirror glass by a piezoelectric oscillator is propagated to a holding member which is provided to retain the circular or peripheral edge portion of the mirror glass, whereby said vibration is influenced by the holding member and the waterdrop repellent efficiency is decreased. For increasing the waterdrop repellent efficiency, the size of the oscillator has to become almost equal to that of the mirror glass, which, however, gives rise to size problems, for example, the electricity consumption of the oscillator will be increased.

If, however, the piezoelectric oscillator is affixed tightly to a part of the rear surface of the mirror glass to have bending vibration, the problem arises that (as shown in Fig. 12) evaporating removal for waterdrops which are sticked to the mirror surface is difficult in the part opposite to where the piezoelectric oscillator is affixed. The reason why evaporating removal is difficult has not yet been fully clarified, however it is presumed to be the following. When driving the mirror glass from the oscillator by means of an oscillation generator, a standing wave is produced in the mirror glass by interference of progressive wave and reflected wave. Waterdrops sticking at the mirror surface are evaporated and removed by this standing wave. When the vibration is coupled to the mirror glass, the mass of the oscillator itself becomes load mass and the reflected wave is absorbed by the oscillator. Thereby the portion where the oscillator is affixed becomes a nodal point of the vibration, causing a difficulty to produce the standing wave. Therefore the vibrating oscillation of said portion is small. For such reason, it is believed that the waterdrops sticking to the mirror surface at said portion remain there, without being evaporated and removed.

Further, the inherent vibration amount (resonance frequency) of the mirror is variable depending on mass variations of the system, including the size of the waterdrops or their sticking condition. Since the resonance frequency and the evaporable particle size of the waterdrops are mutually correlated, it is difficult to remove all waterdrops by a predetermined certain resonance frequency. In consideration thereof, other vibration mirrors have been proposed, providing a frequency converter to convert the frequency of the input vibration of the oscillator (for example Japanese Laid Open Utility Model No. 63-69646 and Japanese Laid Open Patent No. 62-238149). Such equipment is to convert the vibrating frequency generated by the generator at a regular frequency by means of a frequency converter and to amplify the input signal to the oscillator, whereby the oscillator is vibrated, by an amplifier. This vibration of the oscillator creates the standing wave to remove the waterdrops on the mirror glass. And by this conversion of the vibration frequency of the generator, the standing wave is moved, thereby it is composed to increase the waterdrop repellent efficieny.

However, even with this conventional vibration mirror which is able to convert the vibration frequency of the generator, it is very difficult to remove the cloud and frost sticking to the mirror surface according to an outside temperature change, or waterdrops by re-sticked fine mist which narrow the view range. Therefore, it has happened that according to an outside temperature change during driving the view range of the mirror has decreased and rear view confirmation could not be made sufficiently, due to remaining waterdrops on the mirror surface under the above reason and to clouds and frost sticking to the mirror surface.

### 3.OBJECT AND SUMMARY OF THE INVENTION

The present invention is to overcome the problems with the above mentioned conventional equipment, that is to provide a waterdrop repellent mirror with an equipment able to remove the waterdrops of the mirror surface immediately and efficiently.

In this context, the waterdrop repellent mirror should be able to rapidly remove all the water sticking to the mirror surface, including clouds and frost on the mirror surface, regardless of the particle sizes of the waterdrops and sticking portions, by means of a piezoelectric oscillator and a heater which are provided at the rear surface of the mirror.

A waterdrop repellent mirror according to the present claim 1 comprises, to achieve the above objects, a vibration plate at the backside of which a piezoelectric oscillator is mounted, and a heater which is placed therein to heat up the mirror surface. The piezoelectric oscillator on the rear surface of the vibration plate is to give an ultrasonic vibration to the mirror through the vibration plate. When the mirror surface resonates due to imposing the vibration from the oscillator to the mirror, waterdrops sticking to the mirror surface are dispersed. Re-frosted fine mist waterdrops and a frozen layer are removed by heating up the mirror so that the clear mirror surface can be secured. Preferably, the heater for use with the outer mirror is on the back side of the mirror, providing a vibration plate where the piezoelectric oscillator is adapted to give vibration to the mirror glass from the back side of the mirror glass, and providing a flat heater having self thermal control characteristics, whereby waterdrop remained on the mirror surface can be efficiently removed. According to a specific preferred embodiment, a generation circuit to give a vibration to said piezoelectric oscillator at desired frequency, and a sweep circuit to sweep said frequency cycle respectively are provided.

Precisely, according to an aspect of the present invention, the waterdrop repellent mirror adapted for outdoor use such as on the exterior of a vehicle comprises such mirror glass which has a light reflecting layer on the backside thereof, a vibration plate which is firmly affixed to at least a part of the rear surface peripheral edge of said mirror glass, a clearance which is provided between said mirror glass and the vibration plate, a vibration wave generating means which is fixed to said vibration plate, and heating means which are arranged on the rear side of the mirror glass to heat up said mirror glass.

Further, according to a specific and preferred embodiment of the present invention, the outer mirror for vehicles comprises a base fixed to an outer plate of the vehicle, a mirror body movably mounted to said base, a mirror element supported by said mirror body with an adjustable angle, and vibration wave generating means giving resonation to the mirror glass, wherein said mirror element consists of the mirror glass having a light reflecting layer on the backside thereof, the vibration plate affixed to the rear surface peripheral edge of said mirror glass and having an acoustic impedance similar to that of the mirror glass, the clearance which is provided between the mirror glass and the vibration plate, a mirror holder made of synthetic resin which retains the ends of said mirror glass and the vibration plate so as to protect the rear surface area, the piezoelectric oscillator being tightly mounted to said vibration plate, on the rear surface of said mirror glass a thin film being adhered for preventing scattering in case of broken pieces of said mirror glass, and a positive thermal coefficient heater panel with the property of a constant temperature heating control being mounted to the vibration plate in the clearance between said mirror glass and the vibration plate to heat up the mirror glass.

### 4. BRIEF DESCRIPTION OF THE DRAWINGS

Fig. 1 is a front view showing the outline of an embodiment of a waterdrop repellent mirror according to the present invention.

Fig. 2 is a disassembled perspective view showing a mirror inclining unit and a mirror element to be housed in the mirror body of the mirror of Fig. 1.

Fig. 3 is a disassembled perspective view showing a mirror element of the mirror of Fig. 1.

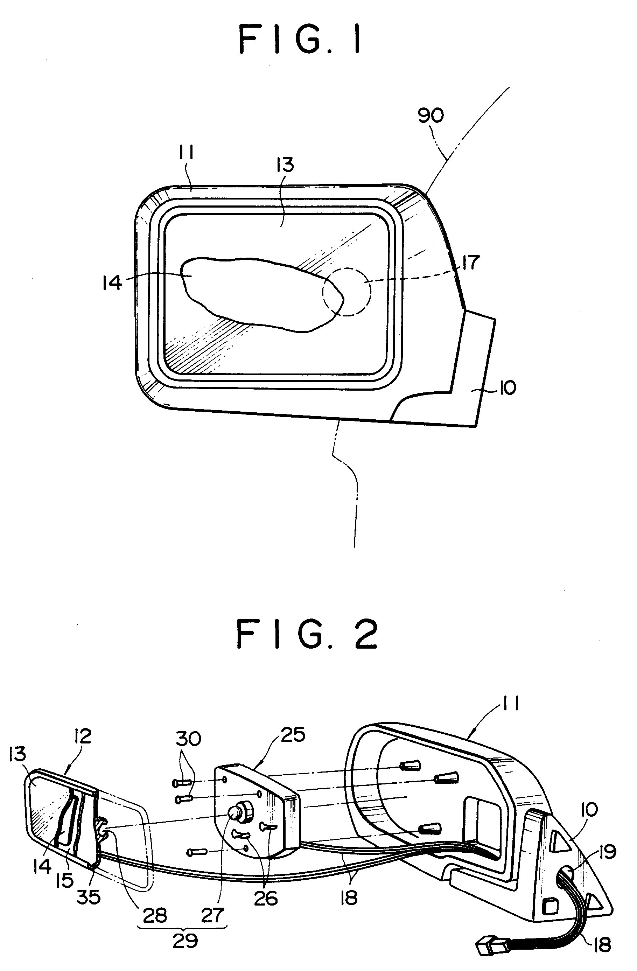

Fig.s 4A and 4B are enlarged vertical cross sectional views showing an assembled condition of a mirror glass vibration system of the mirror in Fig. 1.

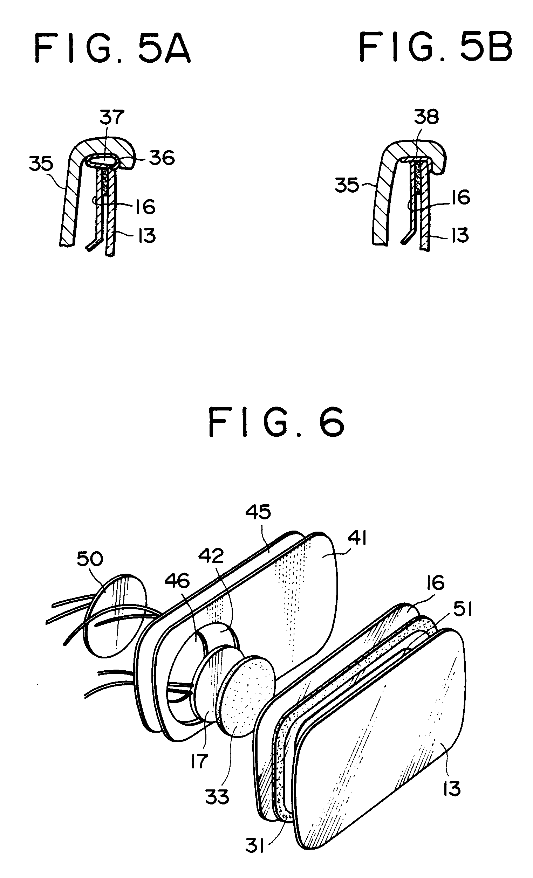

Figs. 5A and 5B are enlarged vertical cross sectional views showing another embodiment setting up the mirror glass to a mirror holder.

Fig. 6 is a disassembled perspective view showing a mirror element of another embodiment according to the present invention.

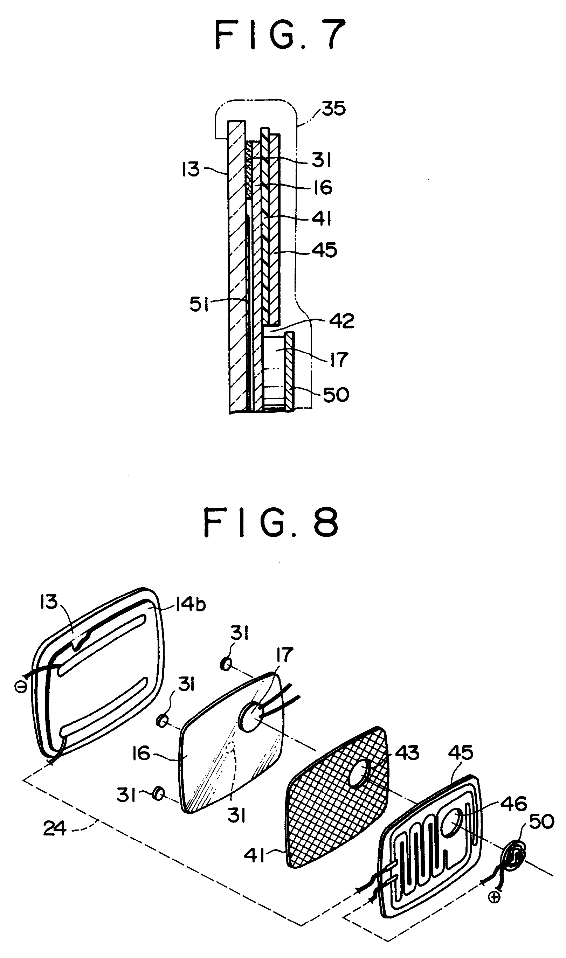

Fig. 7 is a vertical cross sectional view showing the assembled condition of the mirror element of Fig. 6.

Fig. 8 is a disassembled perspective view showing a structure of another embodiment of the mirror element, but some components are omitted.

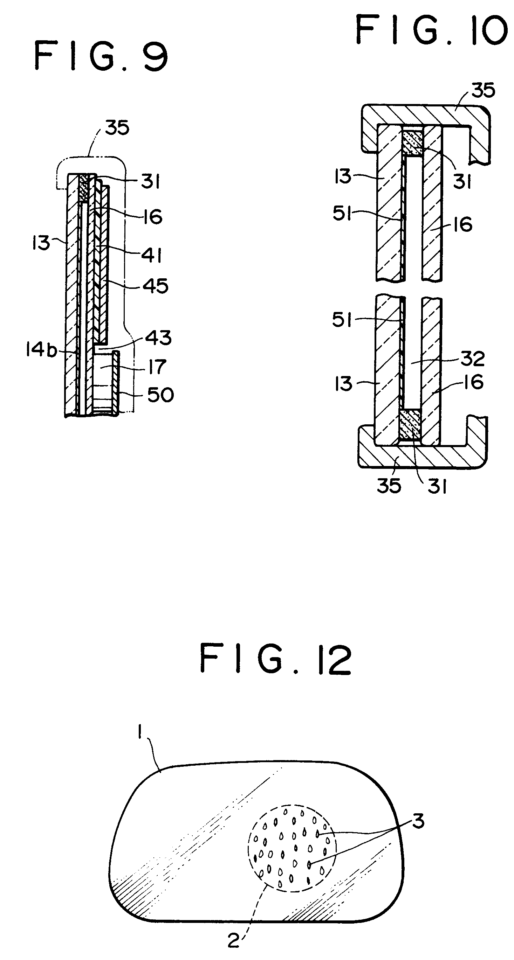

Fig. 9 is a vertical cross sectional view showing the assembled condition of the mirror element of Fig. 8.

Fig. 10 is a vertical cross sectional view showing the assembled condition of the mirror element according to a further embodiment of the present invention.

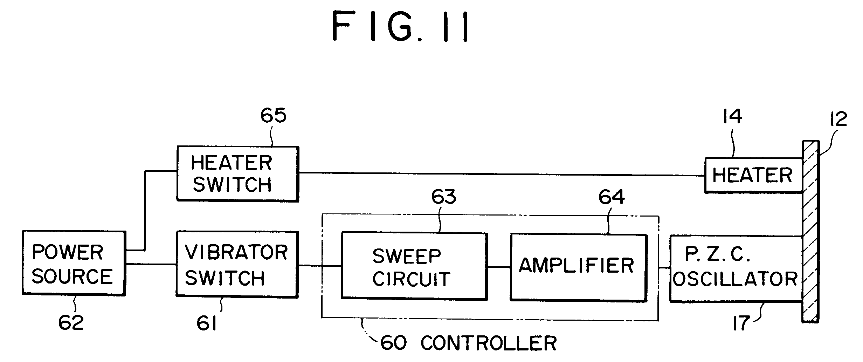

Fig. 11 is a block diagram explaining the electric control of a piezoelectric oscillator and of a heater in an embodiment of the present invention.

Fig. 12 is a front view showing a condition of remaining waterdrops at the mirror surface of a conventional oscillator driven waterdrop repellent mirror.

### 5. DETAILED DESCRIPTION OF THE PREFERRED EMBODIMENTS

A waterdrop repellent mirror according to the present invention is suitable to be used as the rear view mirror fixed to the exterior of a vehicle, such as to the outer plate of a door or fender.

In Figs. 1 and 2, the case is exemplified that the rear view mirror is mounted to the exterior door surface of a vehicle 90.

In the above rear view mirror, a mirror body 11 is movably mounted to the extended portion of a base 10 which is fixed to the outer plate of the vehicle. In the mirror body 11 are housed a mirror inclining movable unit 25 and a mirror element 12 in which a heating means for a mirror glass 13 and a vibration wave generating means are provided. Harness or lead lines 18 are collected from the mirror inclining movable unit 25 and the mirror element 12, and are connected to a controller and operation switch which is not shown in the drawings. Lines 18 are introduced through a opening 19 in the base 10.

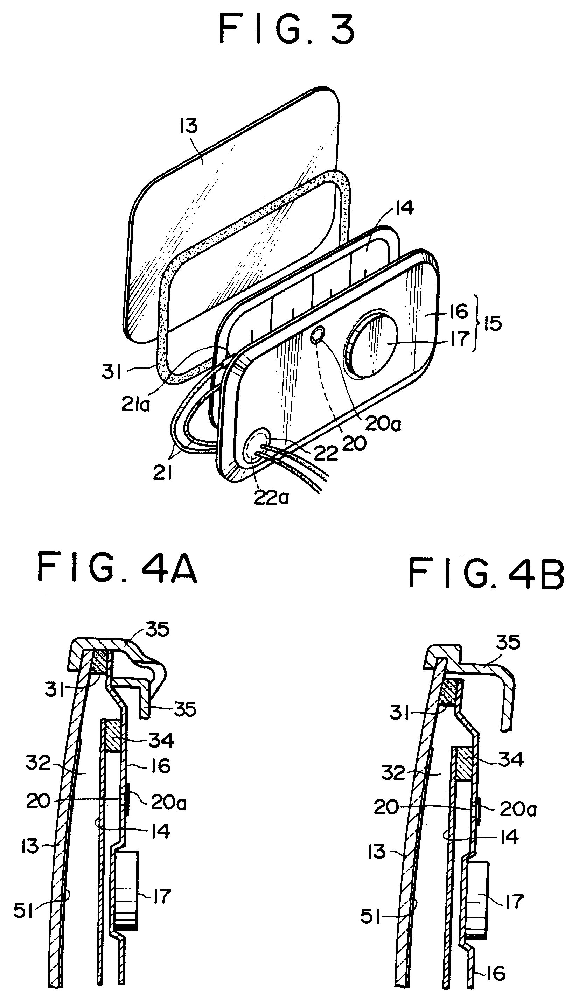

The mirror element 12 (Fig. 3, 4) comprises the mirror glass 13 having a light reflecting layer on the rear surface thereof, a vibration plate 16 having an acoustic impedance similar to said mirror glass 13, a clearance 32 being provided between said mirror glass 13 and the vibration plate 16, and a synthetic resin made mirror holder 35 which is retained at the ends of said mirror glass 13 and vibration plate 16 so as to protect the rear surface of the mirror glass. A detailed description will be made hereafter, referring to the drawings, with respect to said mirror element 12, the heating means for the mirror glass, the vibration wave generating means and their respective assembly relation.

The position of the mirror element 12 is adjusted in the vicinity of the mirror inclining movable unit 25 by a pair of adjustable axes 26. It is supported with free turning by a socket 28 protruding from the mirror element 12. A motor and gear unit in the mirror inclining movable unit 25 gives a piston motion to the axes 26 by which piston motion pushing or pulling motion of the mirror element 12 about its horizontal axis and vertical axis is caused. The mirror element 12 is attached to the mirror inclining movable unit 25 by a joint means 29 consisting of a ball 27 and the ball socket 28, and the mirror inclining movable unit 25 is mounted at the mirror body 11 by screws 30. Such mirror angle adjustable mechanism is disclosed in detail in U.S. Patent No. 4,498,738. However, such adjustable mechanism is not important for the present invention so that such inclining unit 25 is merely mentioned and illustrated for completeness here.

Fig. 3 is a view showing the internal structure of the mirror element 12 which comprises mirror glass 13, a heater 14 behind the mirror glass, a vibration assembly 15, an adhesion member 31 affixed firmly between the mirror glass and the vibration plate 16, and the mirror holder 35. With respect to Fig. 3, the mirror glass 13 and the vibration assembly 15 are shown separated, however actual use is with the adhesion member 31 integrally adhered to both of them as shown in Figs. 4A and 4B.

The mirror glass 13 is for example a tempered glass plate which is chemically tempered, with a thickness of about 1mm and having small mass. At the rear side of this mirror glass, the heater 14 having a pair of electrodes is provided. As heater, an independently formed panel shaped heater separated from the mirror glass is shown, however an electrical conductive thin film heater may also be used as a membrane which is integrally attached to the rear surface of the mirror glass as mentioned later.

The vibration assembly 15 is composed of the vibration plate 16 made of metal material, and of a piezoelectric oscillator 17 which is firmly affixed to the rear surface of the vibration plate by an adhesion member. As a metal material to be used for said vibration plate 16, it is selected from stainless steel, industrial purpose nickel, zirconium or a group of amorphous metal, and it should have vibration characteristics (acoustic impedance) similar to the inherent vibration characteristics of the mirror glass 13. Also for the vibration plate, similarly as for said mirror glass, chemically tempered treated plate glass plate may be used, of which examples are shown in Figs. 6 and 10.

For the piezoelectric oscillator 17, a polycrystalline substance of BaTiO₃ or PbTiO₃-PbZrO₃ can be used. The piezoelectric oscillator in the embodiment is known under the trade name PZT and is commercially available from Clevite (now Vernitoron) in the U.S.A.. It consists of a circular flat plate shaped piezoelectric oscillator which uses piezoelectric ceramics having a vibration mode extending in its radius direction.

The clearance 32 is provided as shown in Figs. 4A and 4B between the mirror glass 13 and the vibration assembly 15, except for the adhering portion of the periphery edge of the mirror glass. The thickness of said clearance 32 is so dimensioned that the panel of heater 14 can be inserted. As the adhesion member 31, generally a thermosetting adhesive can be used, and epoxy adhesive is used in the embodiment.

The adhesion member 31 is formed in ring sheet shape as shown in Fig. 3 to be outlined to the peripheral edge of the mirror glass 13, however it is not limited to such shape. As shown later, also small pieces regardless of the shape which may be such as square or circular, of adhesion members 31 may be placed in plural positions discontinuously on the peripheral edges of rear surface of the mirror glass 13, and the mirror glass 13 and the vibration plate 16 are adhered firmly through said adhesion members as integrated. On this connection, the vibration plate 16 in Fig. 3 has an air vent hole 20 in a part, and in the periphery thereof, a take out aperture 22 is provided to pass through lead wires 21 which are connected to a heater electrode 21a. The air vent hole 20 is sealed by a fiber material 20a having the combined properties of ventilation and water-proofness, such as by trade names known as Goretex or Microtex. The take out aperture, after the lead wires 21 were passed through to be extended to the back, is sealed by a silicon sealant 22a.

Figs. 4A and 4B are parts of the vertical cross sectional views showing a condition that the vibration assembly 15 which was integrally adhered to the mirror glass 13 is retained by the mirror holder 35. Fig. 4A exemplifies retaining by the ending edges of both the mirror glass 13 and the vibration plate 16 being clamped, and Fig. 4B exemplifies retaining by the mirror glass 13 being supported by the mirror holder 35 which is separated from the vibration plate 16 at the rear side thereof. The heater 14 is mounted on the vibration plate 16 through a vibration shielding adhesive or insulation member 34, for example, foamed sheet made of polypropylene resin is used.

The mirror holder 35 is formed by a flexible material to be acceptable for the vibration of the mirror glass 13 such as polyethylene or polyacethal resin, and in the embodiment a polypropylene resin made holder is used.

Fig. 5A shows an example wherein a cushion sheet 36 is interposed between the mirror holder 35 on one side and both edges of the mirror glass 13 and the vibration plate 16 on the other side so as to prevent the reduction of the mirror glass vibration by the mirror holder 35 during the vibration of the mirror glass by the piezoelectric oscillator. An air layer 37 including air bubbles is contained in the cushion sheet 36. Fig. 5B shows a sliding sheet 38 made of high polymer material having some rigidity and a low coefficient of friction such as polytetrafluorethylene, e.g. the one known under the trade name Teflon, which is interposed between the mirror holder 35 on one side and both edges of the mirror glass 13 and the vibration plate 16 on the other side, similarly as in Fig. 5A for the purpose to prevent the reduction of the vibration.

In the waterdrop repellent mirror having a structure as aforementioned, when waterdrops stick on the surface of the mirror glass 13, the piezoelectric oscillator 17 starts to vibrate with the resonance frequency of the mirror glass 13 by means of a generation circuit which is not shown in the drawing. Subsequently, the vibration of the piezoelectric oscillator 17 is propagated to the mirror glass 13 through the vibration plate 16, thereby standing waves are formed in the mirror glass. By means of such standing waves, the mirror glass 13 vibrate at high speed, thereby waterdrops sticking on the surface of the mirror glass are evaporated. And, simultaneously with the vibration of the piezoelectric oscillator or after certain time of operation of the piezoelectric oscillator, heater 14 starts heating by passage of electric current therethrough for a certain time, whereby the mirror glass 13 is heated up and any fine layer of the waterdrops or any frozen layer of ice which could not be removed by said standing waves will be removed.

The position of the heater 14 in the embodiment shown in Figs. 3 and 4 is provided in the clearance 32 between the mirror glass 13 and the vibration plate 16 to increase the thermal conductance. In this connection, the heater 14 may be placed on the rear side of the vibration plate 16 as described, or as the case may be it is placed combined at both of the rear sides of the mirror glass 13 and of the vibration plate 16.

Fig. 6 shows an exploded view of the mirror element 12 where a heater panel 45 is placed to the rear side of the vibration plate 16.

In this embodiment, the vibration plate 16 (for instance made of chemically tempered glass) is tightly adhered to the peripheral edge of the rear side of the mirror glass 13 (for instance made of chemically tempered glass) by the adhesion member 31. On the rear surface of the vibration plate 16, the piezoelectric oscillator 17 is adhered through an adhesive member 33, and also on the rear surface of the vibration plate 16 except for the portion of the piezoelectric oscillator 17, a high polymer material sheet 41 having an air layer including air bubbles is placed; and on the rear surface of said high polymer material sheet 41, the heater panel 45 is hermetically confined, these elements to be assembled as shown in Fig. 7.

Said high polymer material sheet 41 and the heater panel 45 have, as illustrated in Fig. 6, window holes 42 and 46 to house the piezoelectric oscillator 17. On the exposed area at the exterior surface of the piezoelectric oscillator 17 extending through these window holes 42, 46, a small heater panel 50 is hermetically confined, extra to said heater panel 45.

The high polymer material sheet 41 with its air layer minimizes the propagation of the vibration to the heater panel 45 and thus serves to minimize the vibration reduction so that it may be possible to use in the configuration such material as polypropylene or polyethylene sponge sheet, fiber sheet or composite sheet of these materials. Metallic powder may be contained therein to increase the thermal conductability.

As heater panels 45, 50, heat generators are used consisting of positive thermal coefficient thermistors (PTC thermistor) having self thermal control characteristics. The heater panels 45 and 50 consisting of such PTC thermistor have a pattern of combined form with comb teeth shaped electric conductors from the upper and lower ends, which conductors do not overlap each other. When reaching the critical temperature, the electric current is controlled by increasing the self resistance value, by which reaction said heater panel has the characteristic of self control so that the generator is not heated more than to a certain temperature. Therefore, it is not necessary to foresee a temperature controller such as a thermostat, and electric power consumption is very low. And it has an advantage of easy set up compared with a thin film heater which is described later.

Fig. 8 is an explosion view of a modified example wherein the mirror element 13 with a heater panel 14b is arranged separate from the vibration plate at the side of the front surface of the vibration plate 16. Heater 14b consists of an electrically conductive thin film and is integrally formed by metal evaporation on the rear surface of the mirror glass 13. In this embodiment, on the peripheral edge of the front surface of the vibration plate 16, this vibration plate 16 is adhered through for example four to six (four in the example in the drawing) small pieces of adhesion members 31. Similarly as before, the piezoelectric oscillator 17 is adhered by the adhesion member 33 at the rear surface of the vibration plate 16 and the high polymer material sheet 41 is arranged on the rear surface of the vibration plate except for the piezoelectric oscillator. The heater panel 45 is hermetically confined to the back of the high polymer material sheet 41, and the small heater panel 50 is hermetically affixed to the back of the piezoelectric oscillator, and these heater panels 45 and 50 are used as the heat generation bodies having thermal self control characteristics. In regard to Fig. 8, the thin film heater 14 or 14b and heater panels 45, 50 are connected in series electrically through lead wires connected to the respective electrodes, and it is found that at the time of passage of electric current, they collaborate to heat up the mirror glass 13.

Fig. 9 is an assembled view in cross section of the assembly wherein on the rear surface of the mirror glass 13, via adhesion member 31, the vibration plate 16 and piezoelectric oscillator 17 are adhered, in the condition of housing the piezoelectric oscillator 17 in window holes 43, 46, said air layer containing high polymer material sheet 41 and heater panel 45 are overlapped, and on the exterior of the piezoelectric oscillator 17, the small heater panel 50 is adhered, and finally thus arranged all are affixed to the mirror holder 35.

In the above structured vibration mirror, the piezoelectric oscillator 17 is driven by the vibration generating circuit not illustrated in the drawing, and any waterdrops sticking to the mirror glass are dispersed or evaporated by means of the standing waves produced in the mirror glass 13. And fine mist waterdrops or frozen frost re-sticking onto the mirror glass are removed by heating it up by passage of electric current through the thin film heater 14b which is attached to the rear surface of the mirror glass, and by the heater panels 45, 50 from the rear surface of the vibration plate. When the heating devices of said thin film heater 14b and heater panels 45, 50 consisting of PTC thermistors are connected in series electrically as shown in Fig. 8, it is advantageous that not only the starting up time of the temperature increase in the mirror glass to a certain temperature (for example at 65°C) is very quick, but also that the electricity consumption thereof is comparatively low. When reaching the desired temperature, the electric current is controlled by increasing the own resistance value of said heater panels, and by such reaction said heater panels 45, 50 and said thin film heater 14b do not increase the heating temperature more than to a certain temperature.

Figs. 4A and 4B are vertical cross sectional views which exemplify that a thin film 51 is adhered on the rear surface of the mirror glass 13 for preventing any broken pieces of glass from scattering or for retaining such pieces when some physical impact has hit to the mirror glass or when the mirror glass was broken by a rapid temperature change. For instance, as said thin film 51, a polyester film having a thickness of about 50µm is used. The air vent hole 20 provided on the vibration plate 16 is sealed by the fiber material 20a having the combined properties of ventilation and being water-proof as mentioned before.

Fig. 11 is a block diagram showing a circuit for the electric control of the piezoelectric oscillator 17 and the heaters 14, 14a, 45, 50.

The above control circuit comprises a vibrator control portion composed of a controller 60 to impose a vibration to piezoelectric oscillator 17 and to be connected with said oscillator which is mounted to the mirror element 12, an operation switch 61 to operate said controller and a power source 62. The controller 60 of the oscillator 17 has a sweep circuit 63 for generating vibration to vary the frequency of the input vibration to the oscillator, for the purpose of increasing the waterdrop repellent efficiency of sticking waterdrops on the mirror surface, and an amplifier 64 to amplify the input signal to the oscillator. And a heater control portion is composed of control means including the heater 14 mounted to the mirror element 12, a heater control switch 65 and the power source 62.

Said oscillator vibrates with the predetermined optimum frequency for dispersing the waterdrops sticking on the mirror surface. For example, in case of the door mirror shown in Fig. 1, it is exemplified that 50 to 30 KHz of frequency is used, and in accordance with the signal output from sweep circuit 63 for generating the vibration, the electric voltage is supplied to the piezoelectric oscillator 17 through amplifier 64. The vibration of the oscillator starts sweeping with a standard frequency (for example 30 KHz), imposing the vibration at said frequency to said mirror glass 13. At the succeeding step, to the first standard frequency, for example 100 Hz frequency is added, namely giving a vibration of 30.1 KHz. Further, at the next succeeding step, in addition to 30.1 KHz, again 100 Hz frequency is added, namely giving a vibration of 30.2 KHz. And thus by adding some frequency to the first standard frequency in consecutive order, the frequency of the input vibration in the set-up frequency cycle can be progressively varied, giving the vibration to the mirror glass. By repeating this procedure, waterdrops sticking at the mirror surface can be removed.

## Claims

1. An outdoor mirror such as an exterior rear-view mirror of a vehicle, comprising:
(a) a mirror glass (13) which has a light reflecting layer on the backside thereof,
(b) a vibration plate (16) which is firmly affixed to at least a part of the rear surface peripheral edge of said mirror glass (13),
(c) a clearance (32) which is provided between said mirror glass (13) and the vibration plate (16),
(d) a vibration wave generating means (17) which is fixed to said vibration plate (16), and
(e) heating means (14) which are arranged on the rear side of the mirror glass (13) to heat up said mirror glass.

2. Mirror as set forth in claim 1, characterized in that said vibration plate (16) is made of stainless steel, industrial purpose nickel, zirconium or a group of amorphous metal, and has an acoustic impedance similar to that of the mirror glass (13).

3. Mirror as set forth in claim 1, characterized in that said mirror glass (13) and vibration plate (16) are made of tempered glass.

4. Mirror as set forth in any of claims 1 to 3, characterized in that said vibration wave generating means is a piezoelectric oscillator (17) which is fixed firmly to said vibration plate (16) to resonate said mirror glass (13).

5. Mirror as set forth in claim 4, characterized in that said piezoelectric oscillator (17) consists of piezoelectric ceramics having a vibration mode to extend along its radius direction.

6. Mirror as set forth in any of claims 1 to 5, characterized in that the peripheral edge of said vibration plate (16) is tightly fixed in endless condition to the peripheral edge of the rear surface of said mirror glass (13) by using thermosetting epoxy adhesive.

7. Mirror as set forth in any of claims 1 to 6, characterized in that said heating means (14) is a heater panel (14, 45, 50) which is mounted to said vibration plate (16).

8. Mirror as set forth in any of claims 1 to 6, characterized in that said heating means (14b) is a electrically conductive thin film heater formed as a membrane at the rear surface of said mirror glass (13).

9. Mirror as set forth in claim 7, characterized in that said heater panel (14, 45, 50) is a positive thermal coefficient heater panel having a characteristic of constant temperature heating control.

10. Mirror as set forth in any of claims 1 to 6, characterized in that said heating means (14) are an electrically conductive thin film heater (14b) formed as a membrane at the rear surface of said mirror glass (13) and a positive thermal coefficient heater panel (45, 50) having a characteristic of constant temperature heating control which is mounted to said vibration plate (16), and said electrical conductive thin film heater (14b) and the positive thermal coefficient heater panel (45, 50) are electrically connected in series (Fig. 8).

11. Mirror as set forth in claim 7, 9 or 10, characterized in that a vibration insulating member (41) is interposed between said vibration plate (16) and heater panel (45).

12. Mirror as set forth in claim 7 or 9, characterized in that said heater panel (14) is arranged in said clearance (32).

13. Mirror as set forth in any of claims 1 to 7, 9, 11 or 12, characterized in that said mirror glass (13) is adhered on the rear surface thereof with a thin film (51) for preventing it from scattering in case of breaking.

14. Mirror according to any of claims 1 to 13 for vehicles, comprising a base (10) fixed to an outer plate of the vehicle (90), a mirror body (11) movably mounted to said base (10), a mirror element (12) supported by said mirror body (11) with an adjustable angle, and vibration wave generating means (17) oscillating in resonance to the mirror glass (13), characterized in that said mirror element (12) consists of:
- the mirror glass (13),
- the vibration plate (16), having an acoustic impedance similar as the mirror glass (13), the clearance (32) being provided between said mirror glass (13) and the vibration plate (16),
- a synthetic resin made mirror holder (35) which retains the ends of said mirror glass (13) and the vibration plate (16) so as to protect the rear surface area,
- a piezoelectric oscillator (17) which is tightly mounted to said vibration plate (16),
- on the rear surface of said mirror glass (13), a thin film (51) adhered for preventing it from scattering, and
- a positive thermal coefficient heater panel (45, 50) having a characteristic of constant temperature heating control, mounted to the vibration plate (16) in the clearance (32) between said mirror glass (13) and the vibration plate (16) to heat up the mirror glass (13).

15. Mirror as set forth in claim 14, characterized in that a vibration insulating member (41) is interposed between said vibration plate (16) and heater panel (45).

16. Mirror as set forth in claim 14 or 15, characterized in that said vibration wave generating means (17) has control means (60) including a sweep generator (63) connected to the piezoelectric oscillator (17), an amplifier control circuit (64), a generator start-up operation switch (61) and a power source (62).

17. Mirror as set forth in any of claims 14 to 16, characterized in that said positive thermal coefficient heater panel (45) having control means (60) includes a heater control switch (65) and a power source (62).

18. Mirror as set forth in any of claims 14 to 17, characterized in that a cushion sheet (37) having an air layer is interposed between said mirror holder (35) and the edges of said mirror glass (13) and the vibration plate (16).

19. Mirror as set forth in any of claims 14 to 17, characterized in that a sliding sheet (38) made of high polymer material having rigidity and a low coefficient of friction is interposed between the mirror holder (35) and the both edges of the mirror glass (13) and the vibration plate (16).

## Patentansprüche

1. Außenspiegel, wie ein Außenrückblickspiegel eines Fahrzeugs, umfassend:
(a) ein Spiegelglas (13), welches an seiner Rückseite eine lichtreflektierende Schicht hat,
(b) eine Vibrationsplatte (16), welche wenigstens an einem Teil des rückseitigen peripheren Rands dieses Spiegelglases (13) fest angebracht ist,
(c) einen Zwischenraum (32), der zwischen diesem Spiegelglas (13) und der Vibrationsplatte (16) vorhanden ist,
(d) eine Vibrationswellen-Erzeugungseinrichtung (17), welche an der Vibrationsplatte (16) befestigt ist, und
(e) Heizelemente (14), welche an der Rückseite des Spiegelglases (13) angeordnet sind, um das Spiegelglas aufzuheizen.

2. Spiegel nach Anspruch 1, dadurch gekennzeichnet, daß die Vibrationsplatte (16) aus rostfreiem Stahl, industriell verwendetem Nickel, Zirkon oder aus einer Gruppe von amorphem Metall hergestellt ist und eine akustische Impedanz ähnlich der des Spiegelglases (13) hat.

3. Spiegel nach Anspruch 1, dadurch gekennzeichnet, daß das Spiegelglas (13) und die Vibrationsplatte (16) aus getempertem Glas bestehen.

4. Spiegel nach einem der Ansprüche 1 bis 3, dadurch gekennzeichnet, daß die Vibrationswellen-Erzeugungseinrichtung ein piezoelektrischer Oszillator (17) ist, welcher fest auf der Vibrationsplatte (16) angebracht ist, um das Spiegelglas (13) in Resonanz zu versetzen.

5. Spiegel nach Anspruch 4, dadurch gekennzeichnet, daß der piezoelektrische Oszillator (17) aus piezoelektrischen Keramiken besteht, deren Schwingungsmodus sich in radialer Richtung ausbreitet.

6. Spiegel nach einem der Ansprüche 1 bis 5, dadurch gekennzeichnet, daß der periphere Rand der Vibrationsplatte (16) durch Verwendung eines duroplastischen Epoxy-Adhäsivs fest in endlosem Zustand an dem peripheren Rand der Rückseite des Spiegelglases (13) angebracht ist.

7. Spiegel nach einem der Ansprüche 1 bis 6, dadurch gekennzeichnet, daß das Heizelement (14) eine Heiztafel (14, 45, 50) ist, welche an die Vibrationsplatte (16) montiert ist.

8. Spiegel nach einem der Ansprüche 1 bis 6, dadurch gekennzeichnet, daß das Heizelement (14b) eine elektrisch leitende Dünnfilmheizung ist, die als eine Membran an der Rückseite des Spiegelglases (13) ausgebildet ist.

9. Spiegel nach Anspruch 7, dadurch gekennzeichnet, daß die Heiztafel (14, 45, 50) eine Heiztafel mit positivem thermischem Koeffizienten ist, die eine Charakteristik der Konstanttemperatur-Heizungssteuerung hat.

10. Spiegel nach einem der Ansprüche 1 bis 6, dadurch gekennzeichhnet, daß die Heizelemente (14) eine elektrisch leitende Dünnfilmheizung (14b), die als eine Membran an der Rückseite des Spiegelglases (13) ausgebildet ist, und eine Heiztafel mit positivem thermischem Koeffizienten (45, 50), die eine Charakteristik mit Konstanttemperatur-Heizungssteuerung hat und auf der Vibrationsplatte (16) montiert ist, sind und daß diese elektrisch leitende Dünnfilmheizung (14b) und die Heiztafel (45, 50) mit dem positiven thermischen Koeffizienten elektrisch in Reihe geschaltet sind (Fig. 8).

11. Spiegel nach einem der Ansprüche 7, 9 oder 10, dadurch gekennzeichnet, daß ein Vibrationsisolierglied (41) zwischen der Vibrationsplatte (16) und der Heiztafel (45) eingefügt ist.

12. Spiegel nach einem der Ansprüche 7 oder 9, dadurch gekennzeichnet, daß die Heiztafel (14) im Zwischenraum (32) angeordnet ist.

13. Spiegel nach einem der Ansprüche 1 bis 7, 9, 11 oder 12, dadurch gekennzeichnet, daß das Spiegelglas (13) an seiner Rückseite mit einem dünnen Film (51) zum Verhindern des Streuens im Falle eines Bruchs behaftet ist.

14. Spiegel nach einem der Ansprüche 1 bis 13 für Fahrzeuge, umfassend eine an einer Außenfläche des Fahrzeugs (90) befestigte Basis (10), einen beweglich an die Basis (10) montierten Spiegelkörper 11, ein von dem Spiegelkörper (11) getragenes Spiegelelement (12) mit einem einstellbaren Winkel und eine in Resonanz mit dem Spiegelglas (13) oszillierende Vibrationswellen-Erzeugungseinrichtung (17), dadurch gekennzeichnet, daß das Spiegelelement (12) besteht aus:
- dem Spiegelglas (13),
- der Vibrationsplatte (16), die eine akustische Impedanz ähnlich der des Spiegelglases (13) hat, wobei der Zwischenraum (32) zwischen dem Spiegelglas (13) und der Vibrationsplatte (16) vorhanden ist,
- einem aus synthetischem Harz hergestellten Spiegelhalter (35), welcher die Enden des Spiegelglases (13) und der Vibrationsplatte (16) hält, um so die rückseitige Fläche zu schützen,
- einem piezoelektrischen Oszillator (17), welcher fest auf die Vibrationsplatte (16) montiert ist,
- einem auf der Rückseite des Spiegelglases (13) anhaftenden dünnen Film (51) zum Verhindern des Streuens, und
- einer Heiztafel (45, 50) mit positivem thermischem Koeffizienten, die die Charakteristik einer Konstanttemperatur-Heizungssteuerung besitzt und auf der Vibrationsplatte (16) im Zwischenraum (32) zwischen dem Spiegelglas (13) und der Vibrationsplatte (16) montiert ist, um das Spiegelglas (13) aufzuheizen.

15. Spiegel nach Anspruch 14, dadurch gekennzeichnet, daß ein Vibrationsisolierglied (41) zwischen der Vibrationsplatte (16) und der Heiztafel (45) eingefügt ist.

16. Spiegel nach Anspruch 14 oder 15, dadurch gekennzeichnet, daß die Vibrationswellen-Erzeugungseinrichtung (17) ein Steuerelement (60), das einen an den piezoelektrischen Oszillator (17) angeschlossenen Überstreichgenerator (63) beinhaltet, eine Verstärkungssteuerschaltung (64), einen den Erzeuger startenden Betriebsschalter (61) und eine Spannungsquelle (62) hat.

17. Spiegel nach einem der Ansprüche 14 bis 16, dadurch gekennzeichnet, daß die Heiztafel (45) mit positivem thermischem Koeffizienten, die eine Steuereinrichtung (60) besitzt, einen Heizungssteuerschalter (65) und eine Stromquelle (62) beinhaltet.

18. Spiegel nach einem der Ansprüche 14 bis 17, dadurch gekennzeichnet, daß ein Polsterblatt (37), das eine Luftschicht besitzt, zwischen dem Spiegelhalter (35) und den Rändern des Spiegelglases (13) und der Vibrationsplatte (16) eingefügt ist.

19. Spiegel nach einem der Ansprüche 14 bis 17, dadurch gekennzeichnet, daß ein Gleitblatt (38) aus einem steifen hochpolymeren Material, das einen niedrigen Reibungskoeffizienten besitzt, zwischen dem Spiegelhalter (35) und den beiden Kanten des Spiegelglases (13) und der Vibrationsplatte (16) eingefügt ist.

## Revendications

1. Miroir extérieur tel qu'un rétroviseur extérieur de véhicule, comprenant :
(a) un verre de miroir (13) qui comporte une couche réfléchissant la lumière sur sa partie arrière,
(b) une plaque vibrante (16) qui est fermement fixée à au moins une partie de la bordure périphérique de la face arrière dudit verre de miroir (13),
(c) un évidement (32) qui est situé entre ledit verre de miroir (13) et la plaque vibrante (16),
(d) des moyens (17) de production d'ondes vibrantes fixés à ladite plaque vibrante (16), et
(e) des moyens de chauffage (14) qui sont disposés sur la face arrière du verre de miroir (13) pour le chauffer.

2. Miroir selon la revendication 1, caractérisé en ce que ladite plaque vibrante (16) est réalisée en acier inoxydable, en nickel à usage industriel, en zirconium ou en une structure de métal amorphe, et en ce qu'elle est pourvue d'une impédance acoustique similaire à celle du verre de miroir (13).

3. Miroir selon la revendication 1, caractérisé en ce que ledit verre de miroir (13) et la plaque vibrante (16) sont réalisés en verre trempé.

4. Miroir selon l'une quelconque des revendications 1 à 3, caractérisé en ce que lesdits moyens de production d'ondes vibrantes sont constitués par un oscillateur piézoélectrique (17) qui est fixé fermement à ladite plaque vibrante (16) pour faire vibrer ledit verre de miroir (13) en résonance.

5. Miroir selon la revendication 4, caractérisé en ce que ledit oscillateur piézoélectrique (17) est constitué de céramiques piézoélectriques ayant un mode vibratoire pour se propager radialement.

6. Miroir selon l'une quelconque des revendications 1 à 5, caractérisé en ce que la bordure périphérique de ladite plaque vibrante (16) est fermement fixée sur la totalité de la bordure périphérique de la face arrière dudit verre de miroir (13) en utilisant de la colle époxy thermodurcissable.

7. Miroir selon l'une quelconque des revendications 1 à 6, caractérisé en ce que lesdits moyens de chauffage (14) sont réalisés sous la forme d'un panneau chauffant (14, 45, 50) qui est monté sur ladite plaque vibrante (16).

8. Miroir selon l'une quelconque des revendications 1 à 6, caractérisé en ce que lesdits moyens de chauffage (14b) sont constitués par un film chauffant mince, électriquement conducteur, formé comme une membrane sur la face arrière dudit verre de miroir (13).

9. Miroir selon la revendication 7, caractérisé en ce que ledit panneau chauffant (14, 45, 50) est un panneau chauffant à coefficient thermique positif muni d'une commande de chauffage à température constante.

10. Miroir selon l'une quelconque des revendications 1 à 6, caractérisé en ce que lesdits moyens de chauffage (14) sont constitués par un film chauffant mince (14b), électriquement conducteur, formé comme une membrane sur la face arrière dudit verre de miroir (13) et d'un panneau chauffant à coefficient thermique positif (45, 50) pourvu d'une commande de chauffage à température constante qui est montée sur ladite plaque vibrante (16), et en ce que ledit film chauffant mince électriquement conducteur (14b) et le panneau chauffant à coefficient thermique positif (45, 50) sont reliés électriquement en série (fig. 8).

11. Miroir selon les revendications 7, 9 ou 10, caractérisé en ce qu'un élément d'isolation de vibration (41) est interposé entre ladite plaque vibrante (16) et le panneau chauffant (45).

12. Miroir selon les revendications 7 ou 9, caractérisé en ce que ledit panneau chauffant (14) est disposé dans ledit évidement (32).

13. Miroir selon l'une quelconque des revendications 1 à 7, 9, 11 ou 12, caractérisé en ce qu'un film mince (51) est collé sur la face arrière dudit verre de miroir (13) pour éviter sa dispersion en cas de bris.

14. Miroir pour véhicules selon l'une quelconque des revendications 1 à 13, comprenant un socle (10) fixé sur un panneau extérieur du véhicule (90), un corps formant miroir (11) monté de façon à pouvoir se déplacer sur ledit socle (10), un élément formant miroir (12) soutenu par ledit corps de miroir (11) avec un angle réglable, et comprenant des moyens de production d'ondes vibrantes (17) qui oscillent en résonnance avec le verre de miroir (13), caractérisé en ce que ledit élément formant miroir (12) est constitué par :
- le verre de miroir (13) ;
- la plaque vibrante (16), ayant une impédance acoustique similaire à celle du verre de miroir (13), l'évidement (32) étant situé entre ledit verre de miroir (13) et la plaque vibrante (16) ;
- un support de miroir (35) réalisé en résine synthétique qui maintient les extrémités dudit verre de miroir (13) et la plaque vibrante (16) de façon à protéger la partie arrière,
- un oscillateur piézoélectrique (17) qui est monté serré sur ladite plaque vibrante (16) ;
- un film mince (51) collé sur la face arrière dudit verre de miroir (13), pour éviter qu'il se disperse ; et
- un panneau chauffant à coefficient thermique positif (45, 50) ayant une caractéristique de commande de chauffage à température constante, monté sur la plaque vibrante (16) dans l'évidement (32) entre ledit verre de miroir (13) et la plaque vibrante (16) pour chauffer le verre de miroir (13).

15. Miroir selon la revendication 14, caractérisé en ce qu'un élément d'isolation de vibration (41) est interposé entre ladite plaque vibrante (16) et le panneau chauffant (45).

16. Miroir selon la revendication 14 ou la revendication 15, caractérisé en ce que lesdits moyens de production d'ondes vibrantes (17) comportent un moyen de commande (60) comprenant un générateur de balayage (63) relié à l'oscillateur piézoélectrique (17), un circuit amplificateur de commande (64), un commutateur de démarrage du générateur (61) et une source de courant (62).

17. Miroir selon l'une quelconque des revendications 14 à 16, caractérisé en ce que ledit panneau chauffant à coefficient thermique positif (45) comporte un moyen de commande (60) qui comprend un commutateur de commande de chauffage (65) et une source de courant (62).

18. Miroir selon l'une quelconque des revendications 14 à 17, caractérisé en ce qu'une feuille formant coussin (37) comportant une couche d'air est interposée entre ledit support de miroir (35) et les bords dudit verre de miroir (13) et la plaque vibrante (16).

19. Miroir selon l'une quelconque des revendications 14 à 17, caractérisé en ce qu'une feuille coulissante (38), réalisée en matière à base de haut polymère ayant une certaine rigidité et un coefficient de frottement faible, est interposée entre le support de miroir (35) et à la fois les bords du verre de miroir (13) et de la plaque vibrante (16).
